# EUROPÄISCHE PATENTSCHRIFT

(11) **EP 4 030 031 B1**
(45) Veröffentlichungstag und Bekanntmachung des Hinweises auf die Patenterteilung: **02.08.2023**
(21) Anmeldenummer: 21151598.6
(22) Anmeldetag: 14.01.2021
(51) Int. Cl.: E06B 9/262, E06B 9/327, E06B 9/322, E06B 9/388, E06B 9/24, B60J 1/20

(54) **ABSCHIRMVORRICHTUNG**
SHIELDING DEVICE
DISPOSITIF DE BLINDAGE

(43) Veröffentlichungstag der Anmeldung: 20.07.2022
(73) Patentinhaber: Auto-Motion Shade Inc., Scarborough, ON M1V 2W3 (CA)
(72) Erfinder: Grützner, Hans, 3122 Kehrsatz (CH)
(74) Vertreter: AMMANN PATENTANWÄLTE AG

(56) Entgegenhaltungen:
- EP-A1- 1 526 245
- EP-B1- 1 526 245
- EP-B1- 2 231 986
- DE-U1-202013 012 592
- US-A- 4 473 101
- US-A- 4 557 309
- US-A1- 2002 129 906

## Beschreibung

Die Erfindung betrifft eine Abschirmvorrichtung nach dem Oberbegriff des Patentanspruchs 1.

Abschirmvorrichtungen mit einem Rahmen und einem schnurgeführten, verschiebbaren Querstab sind schon länger bekannt, beispielsweise aus dem Dokument US4473101. Sie dienen insbesondere bei Öffnungen wie beispielsweise Fenstern in Gebäuden, aber auch in Fahrzeugen wie beispielsweise Wohnmobilen als Sicht- oder Blend- oder Insektenschutz. Die beschriebenen Führungsschnüre haben im Wesentlichen drei Aufgaben, nämlich erstens die Parallelführung des Querstabes zu gewährleisten und dessen Verkanten zu verhindern, zweitens eine Selbsthemmung des Querstabes zu erwirken, so dass er nicht durch sein Eigengewicht oder durch Erschütterungen verschoben wird und drittens ein zwischen einem oberen Rahmenteil und dem Querstab angeordnetes Abschirmelement zu stützen, so dass es nicht durch Querkräfte, beispielsweise infolge eines Luftzuges oder falscher Handhabung beziehungsweise Bedienung, verformt oder beschädigt wird.

Aus dem Dokument US2005101456A1 ist eine Abschirmvorrichtung mit zwei verschiebbaren Querstäben bekannt geworden, zwischen denen ein Abschirmelement angeordnet ist. Diese Vorrichtung hat insbesondere den Vorteil, dass das sowohl das obere als auch das untere Ende des Abschirmelements verschiebbar ist und dadurch ein beliebiger vertikaler Bereich einer Öffnung abgeschirmt werden kann. Zudem hat die Abschirmvorrichtung nach US2005101456A1 den Vorteil, dass sie mit drei fest angeordneten Rahmenteilen auskommt, also keinen geschlossenen Rahmen benötigt, wodurch sie bei knapp bemessenem Platz, beispielsweise in einem Wohnmobil eingesetzt werden kann.

Insbesondere bei den letztgenannten Abschirmvorrichtungen wird mindestens ein Teil der Führungsschnüre in mindestens einem der Querstäbe an zwei Stellen umgelenkt und zwischen diesen zwei Stellen im Querstab parallel zu diesem geführt. Mindestens ein Teil dieser Umlenkstellen ist durch Löcher im betreffenden Querstab gebildet. Wenn die Querstäbe als C-Profil oder Hohlprofil ausgestaltet sind, ist es sehr schwierig, die Ränder der Löcher sauber zu entgraten und zu brechen oder zu runden, insbesondere an der Innenseite des Profils. Zu scharfe Kanten behindern nicht nur die Bewegung der Querstäbe, sondern können auch zur Beschädigung der Führungsschnüre führen. Ausserdem sind im Falle eines C-Profils die Führungsschnüre zwischen den Flanschen des C-Profils sichtbar und können beim Betätigen des Querstabes mit der Hand störend wirken.

Ausgehend von diesem Stand der Technik besteht eine Aufgabe der Erfindung darin, die Herstellung der Abschirmvorrichtung zu vereinfachen. Eine weitere Aufgabe besteht darin, die Betriebssicherheit der Abschirmvorrichtung zu erhöhen und Beschädigungen der Führungsschnüre möglichst zu vermeiden.

Diese Aufgaben werden erfindungsgemäss durch die Merkmale im kennzeichnenden Teil des Patentanspruchs 1 gelöst.

Dadurch, dass mindestens einer der Querstäbe durch zwei parallel zueinander angeordnete Profile gebildet ist, sind die im Querstab verlaufenden Führungsschnüre von aussen nicht sichtbar. Die Leiste kann vor dem Montieren der Abschirmvorrichtung mit Löchern für jeweils eine der Führungsschnüre versehen werden. Dabei ist die Leiste noch von beiden Seiten ungehindert zugänglich, so dass die Ränder der Löcher einfach entgratet und gebrochen oder gerundet werden können.

Besondere Ausführungsarten der Erfindung sind in den abhängigen Patentansprüchen umschrieben.

Ein Ausführungsbeispiel der Erfindung wird nachstehend unter Bezugnahme auf die angefügten Zeichnungen erläutert. Es zeigen
- Figur 1: eine perspektivische Ansicht einer Abschirmvorrichtung;
- Figur 2: eine Explosionsansicht der Abschirmvorrichtung von Figur 1;
- Figuren 3 und 4: einen Ausschnitt aus Figur 2 in einem gegenüber Figur 2 vergrösserten Massstab;
- Figur 5: in einer schematischen Darstellung den Verlauf der Führungsschnüre und
- Figuren 6 und 7: den Verlauf der Führungsschnüre gemäss Figur 5, zur besseren Übersichtlichkeit getrennt nach Seiten.

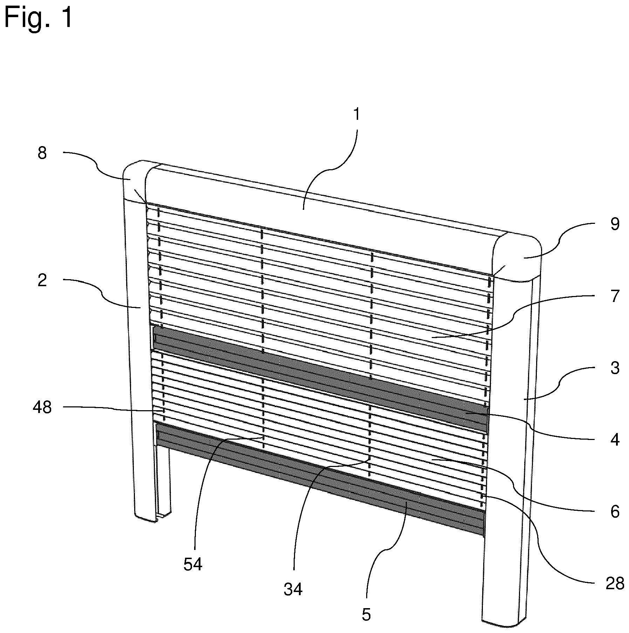

Die in Figur 1 dargestellte Abschirmvorrichtung enthält einen ersten Rahmenteil 1 an dessen beiden Enden ein zweiter Rahmenteil 2 und ein dritter Rahmenteil 3 mittels Eckstücken 8, 9 verbunden ist. Die hier beispielhaft dargestellte Abschirmvorrichtung hat nur drei Rahmenteile, was bei knappen Platzverhältnissen beispielsweise in einem Wohnwagen oder Wohnmobil und insbesondere auch bei Türen vorteilhaft sein kann. Die Erfindung ist aber nicht auf derartige offene Rahmen mit drei Rahmenteilen beschränkt, sondern auch auf geschlossene Rahmen mit vier Rahmenteilen anwendbar.

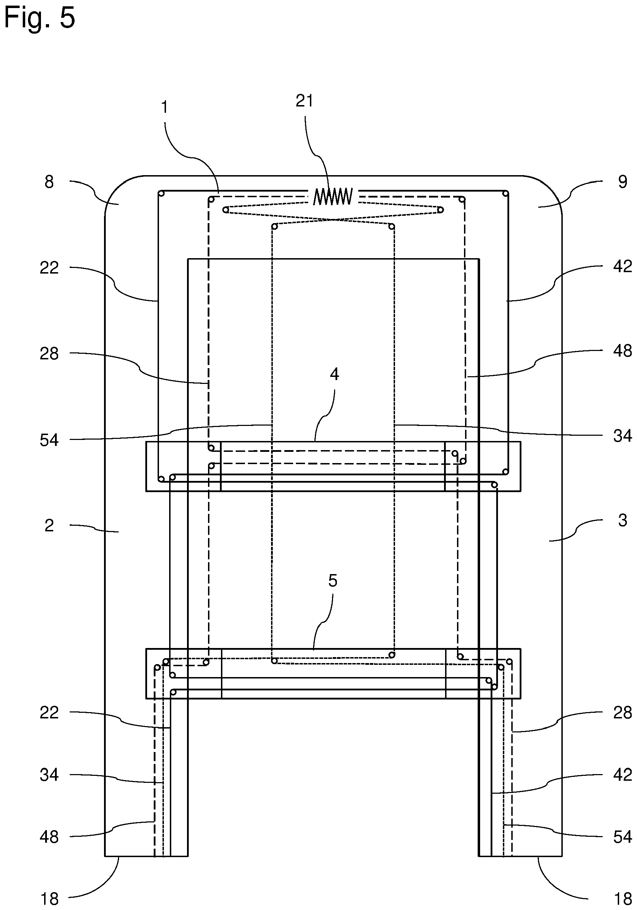

Ein erster Querstab 4 und ein zweiter Querstab 5 sind zwischen dem zweiten und dritten Rahmenteil 2, 3 parallel zum ersten Rahmenteil 1 angeordnet und entlang des zweiten und dritten Rahmenteils 2, 3 unabhängig voneinander verschiebbar. Zwischen dem ersten Querstab 4 und dem zweiten Querstab 5 ist ein plissiertes Abschirmelement 6 angeordnet und mit beiden Querstäben 4, 5 verbunden. Das Abschirmelement 6 kann aus einem textilen Material ausgebildet und teilweise oder ganz lichtundurchlässig sein. Durch Verschieben der Querstäbe 4, 5 miteinander oder gegeneinander ist es möglich, einen Bereich beispielsweise eines Fensters in seiner Grösse und Position den Bedürfnissen des Sicht- oder Blendschutzes anzupassen. Zwischen dem ersten Rahmenteil 1 und dem ersten Querstab 4 ist ein weiteres Abschirmelement 7 angeordnet und mit dem ersten Rahmenteil 1 und dem ersten Querstab 4 verbunden. Dieses weitere Abschirmelement 7 kann beispielsweise eine Netzstruktur aufweisen und als Insektenschutz dienen. Die Anordnung der in dieser Figur sichtbaren Führungsschnüre 28, 34, 48 und 54 wird weiter unten im Zusammenhang mit den Figuren 5 bis 7 näher erläutert.

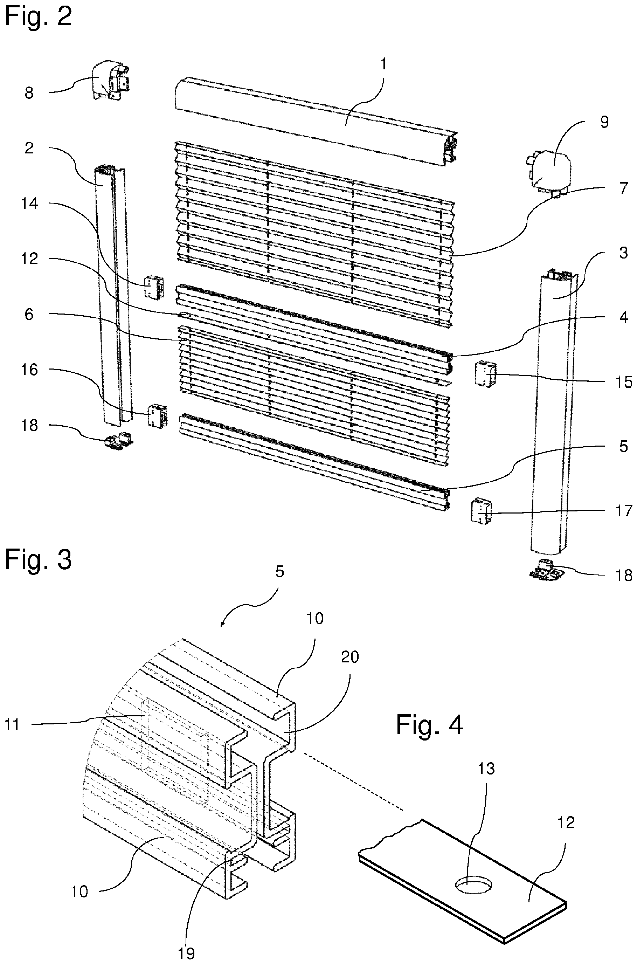

Figur 2 zeigt die Vorrichtung gemäss Figur 1 in einer Explosionsansicht. Gleiche Bauteile sind mit gleichen Bezugszahlen bezeichnet und werden an dieser Stelle nicht alle wiederholt. Die Führungsschnüre sind in dieser Figur nur angedeutet und nicht mit ihrem ganzen Verlauf dargestellt. Wie man sieht, ist der erste Querstab 4 mit zwei Endstücken 14, 15 und der zweite Querstab 5 mit zwei Endstücken 16, 17 versehen. Diese Endstücke 14 bis 17 dienen einerseits der Führung der Querstäbe 4, 5 im jeweiligen Rahmenteil 2, 3 und andererseits der Umlenkung von Führungsschnüren, wie es weiter unten beschrieben wird. Die Rahmenteile 2, 3 weisen an ihrem freien Ende ein Abschlussteil 18 auf, in dem Führungsschnüre verankert sind. Es versteht sich von selbst, dass bei einem geschlossenen Rahmen mit vier Rahmenteilen die Abschlussteile 18 und durch Eckstücke ähnlich wie 8, 9 ersetzt werden.

Figur 3 zeigt in einem vergrösserten Massstab den Querstab 5, der aus zwei identischen Profilen 10 zusammengesetzt ist. Distanzstücke 11 sorgen für einen Abstand zwischen den Profilen 10, durch welchen Abschnitte der Führungsschnüre verlaufen. Bei entsprechender Ausgestaltung der Endstücke 16, 17 kann auf die Distanzstücke 11 verzichtet werden. Die Profile 10 sind mit Längsnuten 19 ausgestattet, die es erlauben, im Querstab 5 ein nicht dargestelltes Bürstenband einzuschieben, das zum Abdichten gegen das Eindringen von Insekten dient, wenn der Querstab 5 in seiner untersten Position ist. Der Querstab 4 ist entsprechend ausgebildet, wobei bei diesem vorzugsweise die Profile 10 so angeordnet sind, dass die Längsnuten 19 oben und natürlich nicht mit einem Bürstenband ausgestattet sind.

Figur 4 zeigt eine Leiste 12 (siehe auch Figur 2) mit Löchern 13, die in einem durch die Profile 10 gebildeten Raum 20 aufgenommen ist. Durch jedes Loch 13 ist jeweils eine der Führungsschnüre geführt und wird dort in einigen Fällen (vgl. Fig. 5 bis 7) umgelenkt. Diese Ausgestaltung mit einer Leiste 12 vereinfacht wesentlich die Herstellung der Abschirmvorrichtung, weil vor dem Einfügen der Leiste 12 in den genannten Raum 20 die Löcher 13 gut zugänglich sind und sorgfältig entgratet und gerundet werden können.

Figur 5 zeigt in einer schematischen Ansicht einerseits die zuvor beschriebenen Komponenten erster Rahmenteil 1, zweiter und dritter Rahmenteil 2 bzw. 3, erster und zweiter Querstab 4 bzw. 5, Eckstücke 8 und 9 und die Abschlussteile 18. Mittig im ersten Rahmenteil 1 ist eine Spannfeder 21 angeordnet, an deren beiden Seiten insgesamt sechs Führungsschnüre befestigt sind. Die Spannfeder 21 kann wie in den Figuren angedeutet eine Wendelfeder sein oder als elastomeres Element, beispielsweise ein Gummiband, ausgebildet sein. An der in der Figur linken Seite der Spannfeder 21 sind die Führungsschnüre 22, 28 und 34 und an der rechten Seite die Führungsschnüre 42, 48 und 54 befestigt. Wie man sieht, ist die Anordnung der Führungsschnüre auf beiden Seiten der Spannfeder 21 symmetrisch.

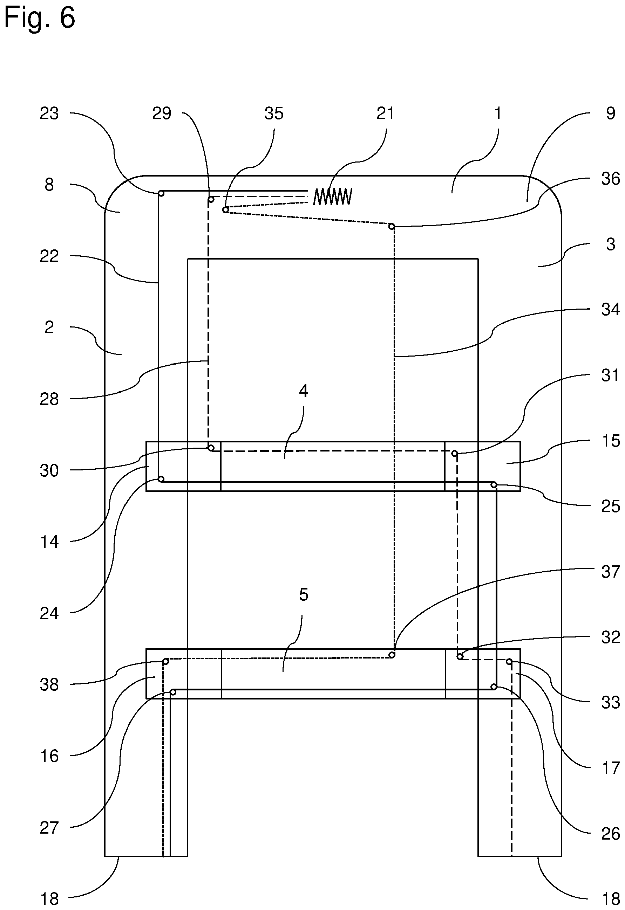

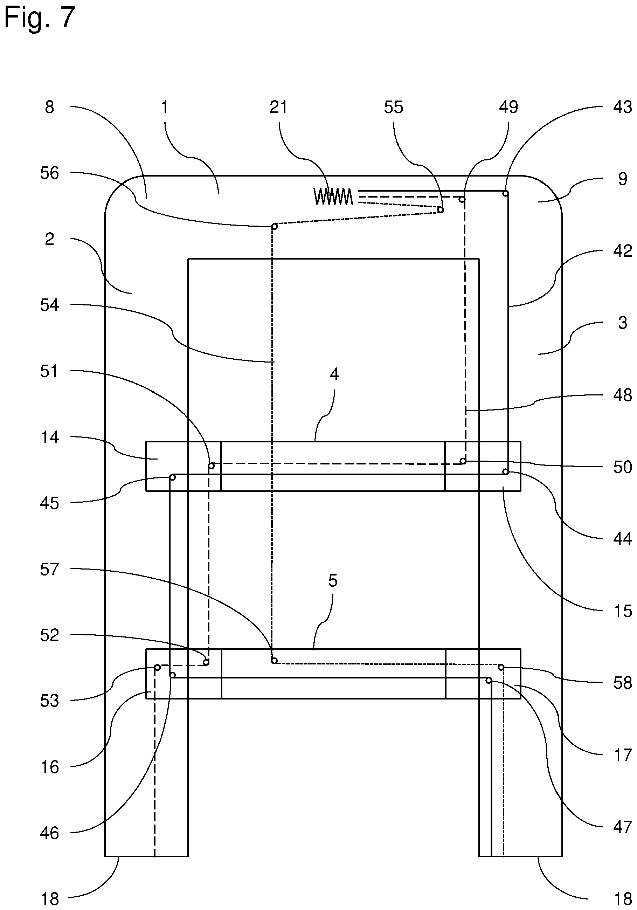

Der besseren Übersichtlichkeit halber ist die detaillierte Anordnung der Führungsschnüre und deren Umlenkstellen in den Figuren 6 und 7 getrennt dargestellt. Dabei zeigt Figur 6 diejenigen Führungsschnüre 22, 28 und 34, die links von der Spannfeder 21 abgehen. In dieser Figur sind auch die zugehörigen Umlenkstellen mit Bezugszahlen bezeichnet.

Entsprechend sind in Figur 7 diejenigen Führungsschnüre 42, 48 und 54 mit ihren zugeordneten Umlenkstellen dargestellt, die rechts von der Spannfeder 21 abgehen. Die Anordnungen gemäss den Figuren 6 und 7 sind wie erwähnt symmetrisch, wobei jede Bezugszahl in Figur 7, die eine Führungsschnur oder Umlenkstelle bezeichnet, derjenigen in Figur 6 addiert mit 20 entspricht.

In Figur 6 ist von der Spannfeder 21 nach links abgehend eine erste Führungsschnur 22 mit einer durchgehenden Linie dargestellt. Nach einer Umlenkstelle 23 im Eckstück 8 verläuft die erste Führungsschnur 22 im Rahmenteil 2 nach unten zu einer Umlenkstelle 24 im Endstück 14 des ersten Querstabes 4. Von dort verläuft die erste Führungsschnur 22 nach rechts durch den ersten Querstab 4 zu einer Umlenkstelle 25 im Endstück 15 des ersten Querstabes 4, von wo sie nach unten durch den Rahmenteil 3 zu einer Umlenkstelle 26 im Endstück des zweiten Querstabes 5 führt. Von dort führt die erste Führungsschnur 22 durch den zweiten Querstab 5 zu einer Umlenkstelle 27 im Endstück 16 des zweiten Querstabes 5, von wo sie durch den Rahmenteil 2 zum Abschlussteil 18 führt und dort befestigt ist.

Eine zweite Führungsschnur 28 ist mit einer unterbrochenen Linie dargestellt und verläuft von der Spannfeder 21 ebenfalls nach links über eine im ersten Rahmenteil 1 angeordnete Umlenkstelle 29 nach unten durch in den umgefalteten Abschnitten des Abschirmelements 7 vorgesehene Öffnungen zu einer Umlenkstelle 30 im Endstück 14 des ersten Querstabes 4. Von dort ist die zweite Führungsschnur 28 durch den ersten Querstab 4 hindurch und parallel zu diesem zu einer Umlenkstelle 31 geführt, die im Endstück 15 des ersten Querstabes 4 angeordnet ist, um dann weiter nach unten durch in den umgefalteten Abschnitten des Abschirmelements 6 vorgesehene Öffnungen zu einer Umlenkstelle 32 im Endstück 17 des Querstabes 5 zu verlaufen. Eine der Umlenkstelle 32 benachbarte Umlenkstelle 33, ebenfalls im Endstück 17, lenkt die zweite Führungsschnur 28 schliesslich zum Abschlussteil 18 im Rahmenteil 3, wo sie befestigt ist.

Eine dritte Führungsschnur 34 ist durch eine punktierte Linie veranschaulicht und wird links von der Spannfeder 21 durch eine Umlenkstelle 35 nach rechts umgelenkt und in entgegengesetzter Richtung durch den ersten Rahmenteil 1 zu einer Umlenkstelle 36 geführt, von wo sie nach unten durch in den umgefalteten Abschnitten des Abschirmelements 7 vorgesehene Öffnungen, ohne Umlenkung durch eines der in der Leiste 12 im ersten Querstab 4 vorhandenen Löcher 13 hindurch und durch in den umgefalteten Abschnitten des Abschirmelements 6 vorgesehene Öffnungen zu einer im Querstab 5 angeordneten Umlenkstelle 37 führt. Die Umlenkstelle 37 ist durch ein Loch 13 in der im Zusammenhang mit den Figuren 2 bis 4 erwähnten Leiste 12 gebildet. Von dort führt die dritte Führungsschnur 34 durch den zweiten Querstab 5 hindurch und parallel zu diesem zu einer im Endstück 16 angeordneten Umlenkstelle 38 und von dort im Rahmenteil 2 zum Abschlussteil 18, wo sie befestigt ist.

Wie erwähnt ist die in Figur 7 dargestellte Anordnung der Führungsschnüre und Umlenkstellen spiegelbildlich zu jener von Figur 6. Die Bezugszeichen 42 bis 58 in Figur 7 entsprechen sinngemäss den Bezugszahlen 22 bis 38 in Figur 6.

### Bezugszeichenliste

| | | | |
|---|---|---|---|
| 1 | erster Rahmenteil | 31 | Umlenkstelle 28 |
| 2 | weiterer Rahmenteil | 32 | Umlenkstelle 28 |
| 3 | weiterer Rahmenteil | 33 | Umlenkstelle 28 |
| 4 | erster Querstab | 34 | dritte Führungsschnur |
| 5 | zweiter Querstab | 35 | Umlenkstelle 34 |
| 6 | Abschirmelement | 36 | Umlenkstelle 34 |
| 7 | weiteres Abschirmelement | 37 | Umlenkstelle 34 |
| 8 | Eckstück | 38 | Umlenkstelle 34 |
| 9 | Eckstück | 39 | |
| 10 | Profil | 40 | |
| 11 | Distanzstück | 41 | |
| 12 | Leiste | 42 | vierte Führungsschnur |
| 13 | Loch | 43 | Umlenkstelle 42 |
| 14 | Endstück | 44 | Umlenkstelle 42 |
| 15 | Endstück | 45 | Umlenkstelle 42 |
| 16 | Endstück | 46 | Umlenkstelle 42 |
| 17 | Endstück | 47 | Umlenkstelle 42 |
| 18 | Abschlussteil | 48 | fünfte Führungsschnur |
| 19 | Längsnuten | 49 | Umlenkstelle 48 |
| 20 | Raum | 50 | Umlenkstelle 48 |
| 21 | Spannfeder | 51 | Umlenkstelle 48 |
| 22 | erste Führungsschnur | 52 | Umlenkstelle 48 |
| 23 | Umlenkstelle 22 | 53 | Umlenkstelle 48 |
| 24 | Umlenkstelle 22 | 54 | sechste Führungsschnur |
| 25 | Umlenkstelle 22 | 55 | Umlenkstelle 54 |
| 26 | Umlenkstelle 22 | 56 | Umlenkstelle 54 |
| 27 | Umlenkstelle 22 | 57 | Umlenkstelle 54 |
| 28 | zweite Führungsschnur | 58 | Umlenkstelle 54 |
| 29 | Umlenkstelle 28 | 59 | |
| 30 | Umlenkstelle 28 | 60 | |

## Patentansprüche

1. Abschirmvorrichtung für eine Öffnung, zum Beispiel ein Fenster oder eine Türe in einem Gebäude oder Fahrzeug, enthaltend einen ersten länglichen Rahmenteil (1) mit zwei Enden, wobei mit jedem Ende des ersten Rahmenteils (1) ein zweiter (2) beziehungsweise dritter (3), zum ersten Rahmenteil (1) rechtwinklig orientierter länglicher Rahmenteil (2, 3) mit einem ersten seiner beiden Enden verbunden ist, einen ersten Querstab (4) und einen zweiten Querstab (5), die parallel zum ersten, fest angeordneten Rahmenteil (1) angeordnet und unabhängig voneinander entlang der beiden weiteren Rahmenteile (2, 3) verschiebbar sind und ein plissiertes Abschirmelement (6), das zwischen dem ersten Querstab (4) und dem zweiten Querstab (5) angeordnet ist, wobei die Querstäbe (4, 5) durch Führungsschnüre (22, 28, 34, 42, 48, 54) geführt sind, **dadurch gekennzeichnet, dass** mindestens einer der Querstäbe (4, 5) durch zwei parallel zueinander angeordnete Profile (10) gebildet ist, die zwischen sich einen Abstand freilassen, in dem eine Leiste (12) mit Löchern (13) für jeweils eine der Führungsschnüre (22, 28, 34, 42, 48, 54) aufgenommen ist.

2. Abschirmvorrichtung nach Anspruch 1, **dadurch gekennzeichnet, dass** die beiden Profile (10) der Querleiste (4, 5) identisch ausgebildet und spiegelbildlich angeordnet sind.

3. Abschirmvorrichtung nach einem der vorangehenden Ansprüche, **dadurch gekennzeichnet, dass** zwischen dem ersten Rahmenteil (1) und dem ersten Querstab (4) ein weiteres plissiertes Abschirmelement (7) angeordnet ist.

4. Abschirmvorrichtung nach einem der vorangehenden Ansprüche, **dadurch gekennzeichnet, dass** jede der Führungsschnüre (22, 28, 34, 42, 48, 54) von einer im fest angeordneten ersten Rahmenteil (1) angeordneten Spannvorrichtung (21) durch die Querstäbe (4, 5) zum vom ersten Rahmenteil (1) entfernten zweiten Ende des zweiten (2) oder dritten Rahmenteils (3) führt.

5. Abschirmvorrichtung nach Anspruch 4, **dadurch gekennzeichnet, dass** mehr als vier Führungsschnüre (22, 28, 34, 42, 48, 54) vorhanden sind, von denen mindestens zwei (28, 34, 48, 54) die umgefalteten Bereiche der plissierten Abschirmelemente (6, 7) durchdringen.

6. Abschirmvorrichtung nach Anspruch 5, **dadurch gekennzeichnet, dass** sechs Führungsschnüre (22, 28, 34, 42, 48, 54) vorhanden sind, von denen vier (28, 34, 48, 54) die umgefalteten Bereiche beider plissierten Abschirmelemente (6, 7) durchdringen.

7. Abschirmvorrichtung nach Anspruch 6, **dadurch gekennzeichnet, dass** die Spannvorrichtung (21) zwei Enden hat und mit jedem Ende drei Führungsschnüre (22, 28, 34; 42, 48, 54) verbunden sind.

8. Abschirmvorrichtung nach einem der Ansprüche 6 bis 7, **dadurch gekennzeichnet, dass** am zweiten Ende des zweiten (2) und dritten Rahmenteils (3) jeweils drei Führungsschnüre (22, 34, 48; 28, 42, 54) befestigt sind.

9. Abschirmvorrichtung nach einem der Ansprüche 5 bis 8, **dadurch gekennzeichnet, dass** im ersten Querstab (4) vier Führungsschnüre (22, 28, 42, 48) umgelenkt werden und zwei Führungsschnüre (34, 54) den ersten Querstab (4) ohne Umlenkung durchdringen.

10. Abschirmvorrichtung nach einem der Ansprüche 6 bis 9, **dadurch gekennzeichnet, dass** alle sechs Führungsschnüre (22, 28, 34, 42, 48, 54) im zweiten Querstab (5) umgelenkt werden.

## Claims

1. A screen device for an opening, e.g. a window or a door in a building or vehicle, comprising a first elongated frame part (1) having two ends, a second (2) and a third (3) elongated frame part (2, 3), respectively, that are oriented at right angles to the first frame part (1), being connected at each end of the first frame part (1) to a first one of its two ends, a first crossbar (4) and a second crossbar (5) which are arranged in parallel to the first fixedly arranged frame part (1) and movable independently of each other along the two further frame parts (2, 3), and a pleated screen element (6) that is arranged between the first crossbar (4) and the second crossbar (5), the crossbars (4, 5) being guided by guide cords (22, 28, 34, 42, 48, 54), **characterized in that** at least one of the crossbars (4, 5) is formed by two profiles (10) that are arranged in parallel to each other and leave a space between them in which a strip (12) provided with holes (13) for respective ones of said guide cords (22, 28, 34, 42, 48, 54) is received.

2. The screen device of claim 1, **characterized in that** the two profiles (10) of the crossbar (4, 5) are identical in design and arranged in a mirror-inverted manner.

3. The screen device of one of the preceding claims, **characterized in that** between the first frame part (1) and the first crossbar (4), an additional pleated screen element (7) is arranged.

4. The screen device of one of the preceding claims, **characterized in that** each of the guide cords (22, 28, 34, 42, 48, 54) runs from a tensioning device (21) that is arranged in the first fixedly arranged frame part (1) through the crossbars (4, 5) to the second end of the second (2) or third frame part (3) on the far side of the first frame part (1).

5. The screen device of claim 4, **characterized in that** more than four guide cords (22, 28, 34, 42, 48, 54) are provided, of which at least two (22, 28, 34, 48, 54) run through the folded areas of the pleated screen elements (6, 7).

6. The screen device of claim 5, **characterized in that** six guide cords (22, 28, 34, 42, 48, 54) are provided, of which four (28, 34, 48, 54) run through the folded areas of both pleated screen elements (6, 7).

7. The screen device of claim 6, **characterized in that** the tensioning device (21) has two ends and three guide cords (22, 28, 34; 42, 48, 54) are connected to each end.

8. The screen device of one of claims 6 to 7, **characterized in that** three respective guide cords (22, 34, 48; 28, 42, 54) are fastened to the second end of the second (2) and third frame parts (3).

9. The screen device of one of claims 5 to 8, **characterized in that** four guide cords (22, 28, 42, 48) are deflected in the first crossbar (4) and two guide cords (34, 54) run through the first crossbar (4) without being deflected.

10. The screen device of one of claims 6 to 9, **characterized in that** all six guide cords (22, 28, 34, 42, 48, 54) are deflected in the second crossbar (5).

## Revendications

1. Un dispositif de blindage pour une ouverture, par exemple une fenêtre ou une porte dans un bâtiment ou un véhicule, contenant une première partie de cadre allongée (1) avec deux extrémités, dans lequel une deuxième (2) et une troisième (3) partie de cadre allongée (2, 3), respectivement, orientée à angle droit par rapport à la première partie de cadre (1), sont reliées à chaque extrémité de la première partie de cadre (1) par une première de ses deux extrémités, une première barre transversale (4) et une deuxième barre transversale (5), qui sont disposées parallèlement à la première partie de cadre (1) disposée de manière fixe et qui peuvent être déplacées indépendamment l'une de l'autre le long des deux autres parties de cadre (2, 3), et un élément de blindage plissé (6), qui est disposé entre la première barre transversale (4) et la deuxième barre transversale (5), dans lequel les barres transversales (4, 5) sont guidées par des cordons de guidage (22, 28, 34, 42, 48, 54), **caractérisé en ce qu'**au moins l'une des barres transversales (4, 5) est formée par deux profilés (10) disposés parallèlement l'un à l'autre, qui laissent entre eux un espace dans lequel une latte (12) avec des trous (13) est logée pour respectivement l'un des cordons de guidage (22, 28, 34, 42, 48, 54).

2. Le dispositif de blindage selon la revendication 1, **caractérisé en ce que** les deux profilés (10) de la barre transversale (4, 5) sont identiques et disposés de manière symétrique.

3. Le dispositif de blindage selon l'une des revendications précédentes, **caractérisé en ce qu'**un autre élément de blindage plissé (7) est disposé entre la première partie de cadre (1) et la première barre transversale (4).

4. Le dispositif de blindage selon l'une des revendications précédentes, **caractérisé en ce que** chacun des cordons de guidage (22, 28, 34, 42, 48, 54) va d'un dispositif de tension (21) disposé dans la première partie de cadre (1) disposée de manière fixe à travers les barres transversales (4, 5) jusqu'à la deuxième extrémité de la deuxième (2) ou troisième partie de cadre (3) éloignée de la première partie de cadre (1).

5. Le dispositif de blindage selon la revendication 4, **caractérisé en ce qu'**il y a plus de quatre cordons de guidage (22, 28, 34, 42, 48, 54), dont au moins deux (28, 34, 48, 54) traversent les zones repliées des éléments de blindage plissés (6, 7).

6. Le dispositif de blindage selon la revendication 5, **caractérisé en ce qu'**il y a six cordons de guidage (22, 28, 34, 42, 48, 54), dont quatre (28, 34, 48, 54) traversent les zones repliées des deux éléments de blindage plissés (6, 7).

7. Le dispositif de blindage selon la revendication 6, **caractérisé en ce que** le dispositif de tension (21) a deux extrémités et trois cordons de guidage (22, 28, 34 ; 42, 48, 54) sont reliés à chaque extrémité.

8. Le dispositif de blindage selon l'une des revendications 6 à 7, **caractérisé en ce que** trois cordons de guidage (22, 34, 48 ; 28, 42, 54) sont respectivement fixés à la deuxième extrémité de la deuxième (2) et troisième (3) partie de cadre.

9. Le dispositif de blindage selon l'une des revendications 5 à 8, **caractérisé en ce que** quatre cordons de guidage (22, 28, 42, 48) sont déviés dans la première barre transversale (4) et deux cordons de guidage (34, 54) traversent la première barre transversale (4) sans être déviés.

10. Le dispositif de blindage selon l'une des revendications 6 à 9, **caractérisé en ce que** tous les six cordons de guidage (22, 28, 34, 42, 48, 54) sont déviés dans la deuxième barre transversale (5).
